# EUROPÄISCHE PATENTANMELDUNG

(11) **EP 4 703 634 A1**
(43) Veröffentlichungstag der Anmeldung: **04.03.2026**
(21) Anmeldenummer: 25196993.7
(22) Anmeldetag: 20.08.2025
(51) Int. Cl.: F21V 8/00, G02B 6/00

(54) **LICHTLEITER MIT FACETTIERTEM KOLLIMATOR FÜR EINE ANZEIGEVORRICHTUNG**

(30) Priorität: 29.08.2024 DE 102024208215
(71) Anmelder: AUMOVIO Germany GmbH, 60488 Frankfurt am Main (DE)
(72) Erfinder: Fitterer, Alexander, 30175 Hannover (DE)
(74) Vertreter: Aumovio Corporation

(57) **Zusammenfassung**

Die vorliegende Erfindung betrifft einen Lichtleiter (400) für eine Anzeigevorrichtung (100) mit einem Display-Panel (200). Der Lichtleiter (400) weist einen Einkoppelbereich (420) zum Einkoppeln von Licht (301) einer Lichtquelle (300) auf. Der Einkoppelbereich (420) weist einen Kollimator (421) auf, der das Licht (301) in kollimiertes Licht (310) umwandelt, wobei der Lichtleiter (400) einen Lichtleitbereich (460) zum Führen des kollimierten Lichts (310) entlang einer Achse (480) aufweist. Der Lichtleitbereich (460) weist eine Oberseite (461), die parallel zur Achse (480) ausgestaltet ist, und eine Unterseite (462), die relativ zur Achse (480) geneigt ist und eine Struktur (463) zum Umlenken des auf die Unterseite (462) auftreffenden kollimierten Lichts (310) als umgelenktes Licht (311) in Richtung der Oberseite (461) auf. Die Struktur (463) ist ausgestaltet, eine homogen flächige Hinterleuchtung der Oberseite (461) zu realisieren, wobei der Lichtleiter (400) einen Umlenkbereich (470) mit einer Lichtumlenkfläche (471) zum Umlenken des kollimierten Lichts (310) in den Lichtleitbereich (460) aufweist. Die Lichtumlenkfläche (461) ist in einem Winkel (α1) von 45° zur Ausrichtung des kollimierten Lichts (310) und zur Achse (480) des Lichtleiterbereichs (460) angeordnet. Der Kollimator (421) weist eine Stufenstruktur (430) auf.

## Beschreibung

Die vorliegende Erfindung betrifft einen Lichtleiter für eine Anzeigevorrichtung zum Einbau in einem Kraftfahrzeug. Derartige Lichtleiter zur Hintergrundbeleuchtung eines Displays einer Anzeigevorrichtung finden heutzutage in nahezu jedem Kraftfahrzeug, beispielsweise einem Tachometer, Anwendung.

Hintergrundbeleuchtungen von Displays basieren hierbei in den meisten Fällen auf Lichtleitern, in die das Licht von mehreren Leuchtdioden (LED: Light Emitting Diode, Licht emittierende Diode) eingekoppelt wird. Das Licht propagiert im Lichtleiter durch Totalreflexion und wird mit Hilfe von Mikrostrukturen auf dem Lichtleiter wieder ausgekoppelt, sodass eine homogene Lichtverteilung entsteht. Dieser Aufbau ermöglicht eine kompakte und effiziente Beleuchtung von Displays mit einer breiten Abstrahlcharakteristik.

Bei derartigen Hintergrundbeleuchtungen ist es oftmals erforderlich, das Licht nach dem Einkoppeln in den Lichtleiter um 90° umzulenken. Diese Umlenkung wird in der Regel unter Verwendung einer planaren Umlenkfläche oder einer gekrümmten Umlenkfläche realisiert. In beiden Fällen erfolgt eine planare Einkopplung des von einer Leuchtdiode ausgestrahlten Lichts, d.h. das ausgestrahlte Licht trifft auf eine planare Einkoppelfläche des Lichtleiters. Bei beiden Konzepten muss der Umlenkbereich aufgrund von ungewünschtem Streulicht mit einer Blende verdeckt werden.

Bei der Verwendung einer gekrümmten Umlenkfläche lässt sich grundsätzlich eine hohe Effizienz der Umlenkung erreichen. Die Effizienz wird dabei umso größer, je geringer die Krümmung der Umlenkfläche ist, dass heißt je länger der gekrümmte Bereich ist.

Nachteilig dabei ist, dass mit steigender Effizienz die Länge des gekrümmten Bereichs zunimmt und damit die Breite der Blende für ungewünschtes Streulicht immer größer wird, was bei vielen Anwendungen unerwünscht ist. Soll eine Umlenkung auf kleinem Raum realisiert werden, kommt es mit den beschriebenen Konzepten zu Effizienzverlusten von 50% und mehr.

Vor diesem Hintergrund beschreibt US 2014/0003071 A1 eine optische Vorrichtung für ein Kraftfahrzeug, die eine Lichtquelle und einen Lichtleiter umfasst, der dazu bestimmt ist, von der Lichtquelle stammendes Licht in Form eines Strahls mit im Wesentlichen parallelen Strahlen zu leiten. Ein Kollimator konzentriert die von der Lichtquelle emittierten Lichtstrahlen, um den Strahl mit im Wesentlichen parallelen Strahlen zu erzeugen. Eine um 45° geneigte reflektierende Fläche lenkt den Strahl um 90° um. Für eine erneute Strahlumlenkung zur Lichtauskoppelung dienen eine Reihe von weiteren um 45° geneigten reflektierenden Flächen. Der Lichtaustritt aus dem Lichtleiter erfolgt dann unter Verwendung lichtbrechender Elemente in der Oberfläche des Lichtleiters. Die optische Vorrichtung dient zur Realisierung von Elementen einer Kraftfahrzeugaußenbeleuchtung.

Der vorliegenden Erfindung liegt die Aufgabe zugrunde, eine verbesserte Lösung für einen Einkoppelbereich eines Lichtleiters bereitzustellen, wodurch eine effizientere Nutzung des in den Lichtleiter eingekoppelten Lichts realisiert und eine homogene Hinterleuchtung einer Anzeigevorrichtung bereitgestellt wird.

Diese Aufgabe wird erfindungsgemäß durch einen Lichtleiter für eine Anzeigevorrichtung gemäß dem Oberbegriff des unabhängigen Anspruchs 1 gemeinsam mit den Merkmalen des kennzeichnenden Teils des unabhängigen Anspruchs 1 gelöst. Vorteilhafte Ausgestaltungen können den Unteransprüchen entnommen werden.

Die Erfindung sieht einen Lichtleiter für eine Anzeigevorrichtung mit einem Display-Panel vor, wobei der Lichtleiter einen Einkoppelbereich zum Einkoppeln von Licht einer Lichtquelle aufweist, wobei der Einkoppelbereich einen Kollimator aufweist, der das Licht in kollimiertes Licht umwandelt, wobei der Lichtleiter einen Lichtleitbereich zum Führen des kollimierten Lichts entlang einer Achse aufweist, wobei der Lichtleitbereich eine Oberseite, die parallel zur Achse ausgestaltet ist, und eine Unterseite, die relativ zur Achse geneigt ist und eine Struktur zum Umlenken des auf die Unterseite auftreffenden kollimierten Lichts als umgelenktes Licht in Richtung der Oberseite aufweist, wobei die Struktur ausgestaltet ist, eine homogen flächige Hinterleuchtung der Oberseite zu realisieren, wobei der Lichtleiter einen Umlenkbereich mit einer Lichtumlenkfläche zum Umlenken des kollimierten Lichts in den Lichtleitbereich aufweist, wobei die Lichtumlenkfläche in einem Winkel von 45° zur Ausrichtung des kollimierten Lichts und zur Achse des Lichtleiterbereichs angeordnet ist, wobei der Kollimator eine Stufenstruktur aufweist.

Bei der erfindungsgemäßen Lösung ist der Lichtleiter ausgebildet, das von einer Lichtquelle, z.B. einer LED, ausgestrahlte Licht, nachdem es in den Einkoppelbereich des Lichtleiters eingekoppelt wird, annähernd zu kollimieren. Das kollimierte Licht trifft dann unter einem definierten Winkeln auf die Lichtumlenkfläche des Umlenkbereichs und wird weiter in den Lichtleitbereich umgelenkt. Die Lichtumlenkfläche sorgt dafür, dass eine flächige, homogene Hinterleuchtung des Lichtleitbereichs erreicht wird. Ein Teil des eingekoppelten Lichts, welches nicht kollimiert wird, trifft hierbei auf eine Fläche der erfindungsgemäßen Stufenstruktur des Kollimators und wird gezielt in seinem Austrittswinkel geändert und umgelenkt, wodurch die Bildung von unerwünschtem, unkontrolliertem Streulicht vermieden wird. Die im Kollimator ausgebildete Stufenstruktur sorgt somit dafür, dass ein Teil des eingekoppelten Lichts in einer definierten Menge unter definierten Winkeln auf die Lichtumlenkfläche des Lichtleiters umgelenkt wird. Beim Auftreffen des von der Stufenstruktur kommenden Lichts auf die Lichtumlenkfläche erfolgt dann aufgrund des durch die Stufenstruktur geänderten Winkels keine Totalreflexion, sondern dass dort auftreffende Licht verlässt weitestgehend oder komplett den Lichtleiter im Bereich der Umlenkfläche in definierten Winkeln. Dieses Licht kann somit genutzt werden, um einen in diesem Bereich befindlichen Teil des Display-Panels zu hinterleuchten. Der nicht nutzbare Rand des Displays kann so auf wenige Millimeter verringert werden, sodass sich nahezu randlose Display-Anzeigen, ohne das eine Blende im Umlenkbereich zum Verdecken von unerwünschtem Streulicht vorgesehen ist, realisieren lassen.

Von besonderem Vorteil bei dem erfindungsgemäßen Lichtleiter ist, dass das von der Lichtquelle in den Einkoppelbereich eingekoppelte Licht in einer definierten Menge durch die im Kollimator ausgebildete Stufenstruktur gezielt umgelenkt wird, wodurch unerwünschtes, unkontrolliertes Streulicht im Umlenkbereich verhindert wird und das von der Stufenstruktur umgelenkte Licht für eine homogene Hinterleuchtung eines Display-Panels verwendet werden kann.

Nach einer vorteilhaften Ausgestaltung der Erfindung weist die Stufenstruktur mindestens sechs Stufen auf. Es hat sich herausgestellt, dass eine solche Stufenstruktur mit mindestens sechs Stufen für eine besonders homogene Lichtverteilung im Umlenkbereich und im daran angrenzenden Lichtleitbereich sorgt. Mit einer solchen Stufenstruktur kann auf einfache Weise die gewünschte flächige Hinterleuchtung und somit eine homogene Hintergrundbeleuchtung des Display-Panels realisiert werden. Ein weiterer Vorteil besteh darin, dass aufgrund einer solchen Stufenstruktur Lichtverluste des in den Lichtleiter eingekoppelten Lichts vermieden werden und hierdurch eine kompakte und effiziente Umlenkung des Lichts auf kleinem Raum realisierbar ist.

Nach einer vorteilhaften Ausgestaltung der Erfindung weist jede der Stufen einen Schenkel auf und die Schenkel sind untereinander mittels jeweils einer Flanke verbunden. Es hat sich herausgestellt, dass die erfindungsgemäße Stufenstruktur, wobei jede Stufe einen Schenkel und eine Flanke aufweist, besonders leicht herzustellen ist, da diese keine aufwendige Geometrie sowie Struktur von der Oberfläche aufweisen. Des Weiteren hat sich herausgestellt, dass eine solche Ausgestaltung bei der Herstellung der erfindungsgemäßen Stufenstruktur, bspw. Spritzgussverfahren, besonders gut entformen lässt.

Nach einer vorteilhaften Ausgestaltung der Erfindung weist jeder Schenkel jeweils einen Winkel zur Senkrechten zur Ausbreitungsrichtung des kollimierten Lichts auf. Es hat sich herausgestellt, dass die Schenkel in einem Winkel zur Senkrechten zur Ausbreitungsrichtung des kollimierten Lichts für eine besonders gute Reduzierung von Streulicht und somit für eine homogene Hinterleuchtung im Umlenkbereich und im daran angrenzenden Lichtleitbereich sorgen. Ein weiterer Vorteil besteht darin, dass das von den Schenkeln umgelenkte Licht gleichmäßig auf das Display-Panel im Bereich des Umlenkbereichs verteilt wird, wodurch unterschiedlich helle Bereiche vermieden und auf einfache Weise eine gewünschte homogene Hinterleuchtung des Umlenkbereichs sowie des angrenzenden Lichtleitbereichs und somit eine homogene Hinterleuchtung des gesamten Display-Panels realisiert wird, ohne dass Verluste des eingekoppelten Lichts entstehen. Des Weiteren hat sich herausgestellt, dass es zu keiner Überleuchtung aufgrund einer unkontrollierten Lichtverteilung im Lichtumlenkbereich kommt und unerwünschtes, überschüssiges Licht, welches in den Lichtleiter eingekoppelt wird, wieder aus dem Lichtleiter ausgekoppelt werden muss und somit ungenutzt verloren geht.

Nach einer vorteilhaften Ausgestaltung der Erfindung nehmen die Winkel der Schenkel zur Senkrechten zur Ausbreitungsrichtung des kollimierten Lichts von der Lichtquelle zu der Unterseite des Lichtleitbereichs zu.

Vorteilhafterweise weist ein erster Schenkel, der der Lichtquelle am nächsten liegt und am weitesten von der Unterseite des Lichtleitbereichs entfernt ist, einen ersten Winkel zur Senkrechten zur Ausbreitungsrichtung des kollimierten Lichts in einem Winkelbereich zwischen 55° und 65°, vorzugsweise in einem Winkel von 60° auf.

Vorteilhafterweise weist ein zweiter Schenkel, der dem ersten Schenkel nachfolgt, einen zweiten Winkel zur Senkrechten zur Ausbreitungsrichtung des kollimierten Lichts in einem Winkelbereich zwischen 65° und 75°, vorzugsweise in einem Winkel von 70° auf.

Vorteilhafterweise weist ein dritter Schenkel, der dem zweiten Schenkel nachfolgt, einen dritten Winkel zur Senkrechten zur Ausbreitungsrichtung des kollimierten Lichts in einem Winkelbereich zwischen 75° und 85°, vorzugsweise in einem Winkel von 80 auf.

Vorteilhafterweise weist ein vierter Schenkel, der dem dritten Schenkel nachfolgt, einen vierten Winkel zur Senkrechten zur Ausbreitungsrichtung des kollimierten Lichts in einem Winkelbereich zwischen 80° und 90°, vorzugsweise in einem Winkel von 85° auf.

Vorteilhafterweise weist ein fünfter Schenkel, der dem vierten Schenkel nachfolgt, einen fünften Winkel zur Senkrechten zur Ausbreitungsrichtung des kollimierten Lichts in einem Winkelbereich zwischen 87° und 97°, vorzugsweise in einem Winkel von 92° auf.

Vorteilhafterweise weist ein sechster Schenkel, der dem fünften Schenkel nachfolgt und der Unterseite des Lichtleitbereichs am nächsten liegt, einen sechsten Winkel zur Senkrechten zur Ausbreitungsrichtung des kollimierten Lichts in einem Winkelbereich zwischen 91° und 102°, vorzugsweise in einem Winkel von 96° auf.

In der erfindungsgemäßen Stufenstruktur des Kollimators ist der erste Winkel kleiner dem zweiten Winkel, der zweite Winkel kleiner dem dritten Winkel, der dritte Winkel kleiner dem vieren Winkel, der vierte Winkel kleiner dem fünften Winkel und der fünfte Winkel kleiner dem sechsten Winkel. Es hat sich herausgestellt, dass der Kollimator mit derartigen Winkeln der Stufen eine besonders effiziente Beleuchtung von Display-Panels auch im Umlenkbereich mit einer breiten Abstrahlcharakteristik ermöglicht, wobei das Licht der Lichtquelle vollständig verwendet wird, ohne das Verluste entstehen. Das von den Schenkeln umgelenkte Licht wird somit in der benötigten Intensität in Richtung der Umlenkfläche des Umlenkbereichs umgelenkt und im Umlenkbereich wieder ausgekoppelt.

Nach einer vorteilhaften Ausgestaltung der Erfindung weist jede der Flanken einen Winkel zur Senkrechten zur Ausbreitungsrichtung des kollimierten Lichts auf.

Vorteilhafterweise weist eine erste Flanke, die den ersten Schenkel mit dem zweiten Schenkel verbindet, einen ersten Winkel zur Senkrechten zur Ausbreitungsrichtung des kollimierten Lichts in einem Winkelbereich zwischen 13° und 23°, vorzugsweise in einem Winkel von 18° auf.

Vorteilhafterweise weist eine zweite Flanke, die den zweiten Schenkel mit dem dritten Schenkel verbindet, einen zweiten Winkel zur Senkrechten zur Ausbreitungsrichtung des kollimierten Lichts in einem Winkelbereich zwischen 25° und 35°, vorzugsweise in einem Winkel von 30° auf.

Vorteilhafterweise weist eine dritte Flanke, die den dritten Schenkel mit dem vierten Schenkel verbindet, einen dritten Winkel zur Senkrechten zur Ausbreitungsrichtung des kollimierten Lichts in einem Winkelbereich zwischen 38° und 48°, vorzugsweise in einem Winkel von 43° auf.

Vorteilhafterweise weist eine vierte Flanke, die den vierten Schenkel mit dem fünften Schenkel verbindet, einen vierten Winkel zur Senkrechten zur Ausbreitungsrichtung des kollimierten Lichts in einem Winkelbereich zwischen 39° und 49°, vorzugsweise in einem Winkel von 44° auf.

Vorteilhafterweise weist eine fünfte Flanke, die den fünften Schenkel mit dem sechsten Schenkel verbindet, einen fünften Winkel zur Senkrechten zur Ausbreitungsrichtung des kollimierten Lichts in einem Winkelbereich zwischen 38° und 48°, vorzugsweise in einem Winkel von 43° auf. Es hat sich herausgestellt, dass der Einkoppelbereich aufgrund der im Kollimator ausgebildeten Stufenstruktur besonders einfach an den Aufbau der Anzeigevorrichtung, insbesondere an die Größe des zu hinterleuchtenden Display-Panels angepasst werden kann. Das heißt, dass die jeweiligen Schenkel, die untereinander jeweils mit einer Flanke verbunden sind, in ihrer Anordnung so angepasst werden können und somit der Einkoppelbereich des Lichtleiters in seiner Höhe und der Breite variiert werden kann, damit eine optimale Hinterleuchtung des Display-Panels erzielt wird. Somit lässt sich bei begrenzendem Bauraum aufgrund der im Einkoppelbereich ausgebildeten Stufenstruktur, der Abstand beispielsweise zwischen einer Lichtquelle und dem Umlenkbereich, auf einfach Weise variieren, ohne das unerwünschtes Streulicht entsteht und somit eine Blende hierfür erforderlich ist. Eine Höhenvariation von Einkoppelbereichen ist insbesondere bei Kombiinstrumenten mit integrierten Display-Panels von Vorteil.

Nach einer vorteilhaften Ausgestaltung der Erfindung weist der Lichtleiter an dem Einkoppelbereich und/oder dem Umlenkbereich eine zweite Lichtumlenkfläche auf.

Im bevorzugten Fall weist der Lichtleiter an dem Einkoppelbereich und dem Umlenkbereich eine zweite Lichtumlenkfläche auf. Alternativ kann auch nur an dem Einkoppelbereich oder nur an dem Umlenkbereich des Lichtleiters eine zweite Lichtumlenkfläche ausgebildet sein. Die zweite Lichtumlenkfläche ist im bevorzugten Fall als eine Abschrägung ausgebildet, wobei die Abschrägung in einem Winkel zur Senkrechten zur Ausbreitungsrichtung des kollimierten Lichts in einem Winkelbereich zwischen 46° und 50°, vorzugsweise in einem Winkel von 47° ausgebildet ist. Alternativ kann die zweite Lichtumlenkfläche auch als Radius beziehungsweise gekrümmte Fläche ausgebildet sein. Es hat sich herausgestellt, dass eine zweite Lichtumlenkfläche mit einer Abschrägung im Winkel von 46° besonders vorteilhaft ist, damit das nicht vollständig kollimierte Licht und das nicht durch die erfindungsgemäße Stufenstruktur umgelenktes Licht, auf einfache Weise gezielt umgelenkt und genutzt werden kann, wodurch es zu keiner Überleuchtung und somit zu einer homogenen Lichtverteilung des eingekoppelten Lichts im Lichtleiter kommt.

Nach einer vorteilhaften Ausgestaltung der Erfindung weist der Lichtleiter am Übergang der Stufenstruktur in die Unterseite des Lichtleitbereichs eine dritte Lichtumlenkfläche auf.

Im bevorzugten Fall ist die dritte Lichtumlenkfläche als Radius ausgebildet. Die dritte Lichtumlenkfläche weist einen Radius in einem Bereich zwischen 50 mm und 150 mm, vorzugsweise einen Radius von 100 mm auf. Alternativ kann die dritte Lichtumlenkfläche auch als eine Abschrägung zwischen dem Übergang der Stufenstruktur in die Unterseite des Lichtleitbereichs ausgebildet sein. Es hat sich herausgestellt, dass durch die dritte Lichtumlenkfläche mit einem Radius von 50 mm das von der zweiten Lichtumlenkfläche umgelenkte Licht gezielt in der benötigten Intensität in einen Bereich zwischen dem Umlenkbereich und dem Lichtleitbereich des Lichtleiters gelenkt und somit die gewünschte flächige homogene Hinterleuchtung des Display-Panels in diesem Bereich realisiert wird.

Hierdurch kommt es zu keinen Verlusten des eingekoppelten Lichts oder zu keinem unerwünschten, unkontrollierten Streulicht im Lichtleiter.

Verwendung findet der erfindungsgemäße Lichtleiter in Anzeigevorrichtung, insbesondere im Automobilbereich, z.B. für ein zentrales Display in der Armaturentafel oder ein Kombiinstrument.

Weitere Merkmale der vorliegenden Erfindung werden aus der nachfolgenden Beschreibung und den angehängten Ansprüchen in Verbindung mit den Figuren ersichtlich. Vorteilhafte Weiterbildungen der Erfindung ergeben sich zudem auch durch die Merkmale der folgenden Beschreibung sowie den Figuren.

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

### Figurenübersicht

Es zeigen in schematischer, skizzenhafter Darstellung:
- Fig. 1: bekannte Konzepte zur Lichtumlenkung in einem Lichtleiter,
- Fig. 2: einen Schnitt durch einen bekannten Lichtleiter,
- Fig. 3: einen Schnitt durch eine Ausführungsform eines erfindungsgemäßen Lichtleiters;
- Fig. 4: einen Schnitt durch eine vergrößerte Darstellung einer Ausführungsform eines Einkoppelbereichs eines erfindungsgemäßen Lichtleiters;
- Fig. 5: einen Schnitt durch eine Anzeigevorrichtung mit einem erfindungsgemäßen Lichtleiter.

### Figurenbeschreibung

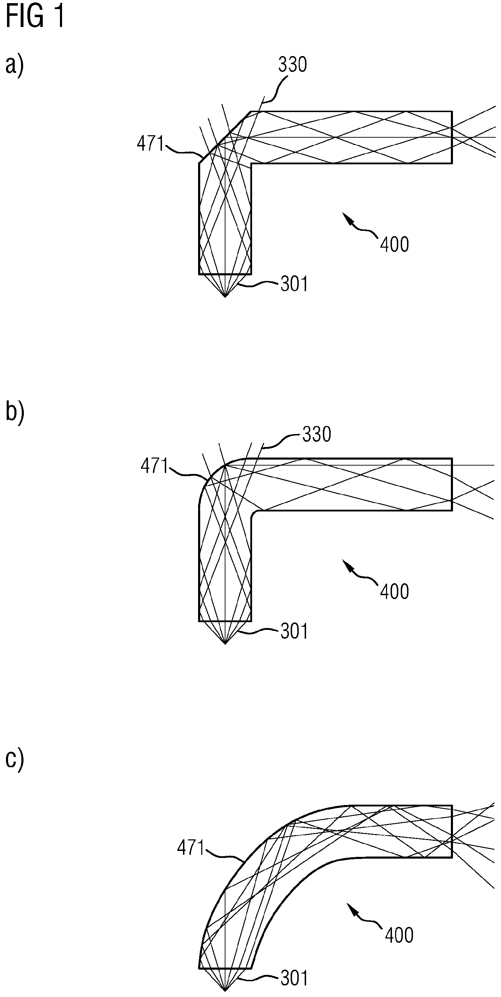

Fig. 1 zeigt bekannte Konzepte zur Lichtumlenkung in einem Lichtleiter 400. Bei Hintergrundbeleuchtungen ist es oftmals erforderlich, das Licht 301 nach dem Einkoppeln in den Lichtleiter 400 um 90° umzulenken. Bei einem ersten Konzept wird für diese Umlenkung eine planare Umlenkfläche 471 genutzt. Dieses Konzept ist in Fig. 1a) dargestellt und erreicht eine Effizienz der Umlenkung von ca. 50%. Bei einem weiteren Konzept wird für die Umlenkung eine gekrümmte Fläche 471 genutzt. Beispiele dafür sind in Fig. 1b) und Fig. 1c) gezeigt. In Fig. 1b) handelt es sich bei der gekrümmten Fläche 471 bzw. beim Schnitt durch die gekrümmte Fläche 471 um einen Kreisbogen. In Fig. 1c) handelt es sich hingegen um eine parabelförmige Umlenkung. In allen Fällen erfolgt eine planare Einkopplung des von einer in der Figur nicht dargestellten Leuchtdiode ausgestrahlten Lichts 301, d.h. das ausgestrahlte Licht 301 trifft auf eine planare Einkoppelfläche des Lichtleiters 400. Bei beiden Konzepten muss der Bereich der Umlenkfläche 301 aufgrund von Streulicht mit einer in den Figuren nicht dargestellten Blende verdeckt werden.

Bei der Verwendung einer gekrümmten Umlenkfläche 471 lässt sich grundsätzlich eine hohe Effizienz der Umlenkung erreichen. Die Effizienz wird dabei umso größer, je geringer die Krümmung der Umlenkfläche ist. Während beispielsweise bei der in Fig. 1b) gezeigten Anordnung lediglich eine Effizienz von 40% erzielt wird, liegt die Effizienz der in Fig. 1c) gezeigten Anordnung bei 90%. Dies bedeutet allerdings, dass mit steigender Effizienz die Breite der Blende immer größer wird, was bei vielen Anwendungen unerwünscht ist.

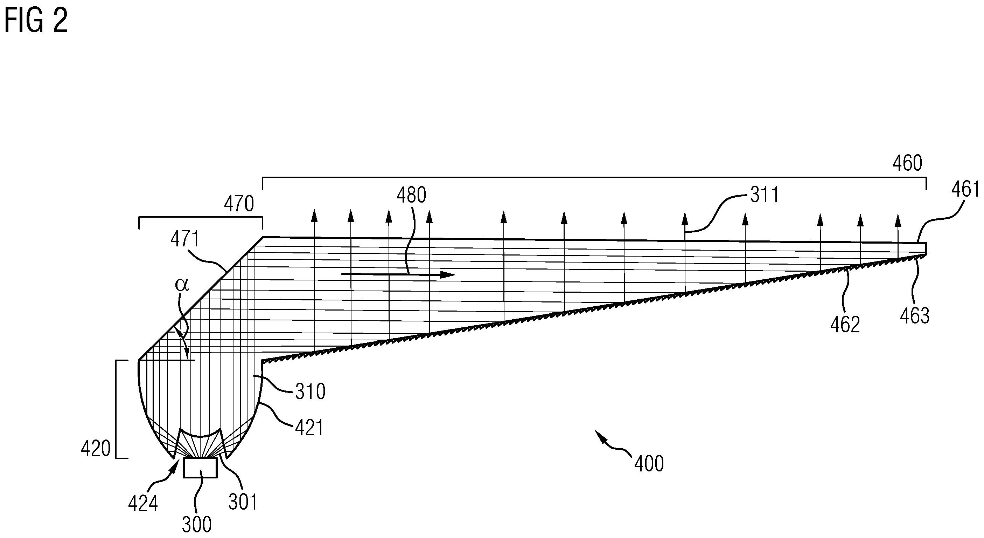

Fig. 2 zeigt einen Schnitt durch einen bekannten Lichtleiter 400. Der gezeigte Lichtleiter 400 weist einen Einkoppelbereich 420 zum Einkoppeln von Licht 301 einer Lichtquelle 300 auf, z.B. einer Single-Colour-LED. Der Einkoppelbereich 420 weist einen Kollimator 421 zur Kollimation des Lichts 301 auf. Der Kollimator 421 kann zumindest teilweise auf Totalreflexion basieren.

Der Einkoppelbereichs 420 weist weiter eine Nut 424 als Einkoppelfläche in dem Kollimator 421 auf, wobei die Nut 424 mehrere, drei, zueinander ausgerichtete Einkoppelflächen aufweist. Die Lichtquelle 300 ist im montierten Zustand mit dem Lichtleiter 400 unterhalb der Nut 424 des Kollimators 421 angeordnet. Die Einkopplung des von der Lichtquelle 300 ausgestrahlten Lichts 301, d.h. das ausgestrahlte Licht 301 trifft auf die einzelnen Einkoppelflächen der Nut 424 und das ausgestrahlte Licht 301 wird in den Einkoppelbereich 420 eingekoppelt. Der Kollimator wandelt das in den Einkoppelbereich 420 eingekoppelte Licht 301 in kollimiertes Licht 310 um.

Ein Umlenkbereich 470 mit einer planaren Lichtumlenkfläche 471 dient zum Umlenken des kollimierten Lichts 310 in einen Lichtleitbereich 460. Im Lichtleitbereich 460 breitet sich dann wiederum das kollimierte Licht 310 aus, wobei das Ausbreitungsverhalten vorhersehbar ist. Die Lichtumlenkfläche 471 ist in einem Winkel α1 von 45° zur Ausrichtung des kollimierten Lichts 310 und zur Achse 480 des Lichtleiterbereichs 460 angeordnet.

Der Lichtleitbereich 460 dient zum Führen des kollimierten Lichts 310 entlang einer Achse 480. Der Lichtleitbereich 460 weist eine Oberseite 461 auf, die parallel zur Achse 480 ausgestaltet ist, und eine Unterseite 462, die relativ zur Achse 480 geneigt ist. Die Unterseite 462 weist eine Struktur 463 zum Umlenken des auf die Unterseite 462 auftreffenden kollimierten Lichts 310 in Richtung der Oberseite 461 des Lichtleiters 400 auf. Die Struktur 462 sorgt dafür, dass durch das in den Lichtleitbereich 460 umgelenkte kollimierte Licht 310 reflektiert und eine flächige, homogene Lichtverteilung im Lichtleitbereich 460 erreicht wird. Das kollimierte Licht 310 wird als Licht 311 an der Oberseite 461 des Lichtleitbereichs 460 wieder ausgekoppelt und zur Hinterleuchtung eines nicht dargestellten Display-Panels 200 verwendet. Die Struktur 463 auf der Unterseite 462 des Lichtleitbereichs 460 ist ausgestaltet, eine flächige Ausleuchtung der Oberseite 461 des Lichtleitbereichs 460 zu realisieren. Bei der Struktur 463 kann es sich um eine Microstruktur oder beispielsweise um eine Spiegelstruktur oder eine Gitterstruktur, z.B. ein Reflexionsgitter, handeln. Die Struktur 463 ist auf der Außenseite der Unterseite 462 des Lichtleitbereichs 460 ausgebildet. In Fig. 2 sind der Einkoppelbereich 420 und der Umlenkbereich 470 für ein besseres Verständnis größer dargestellt, als dies für eine tatsächliche Realisierung des Lichtleiters 400 erforderlich ist.

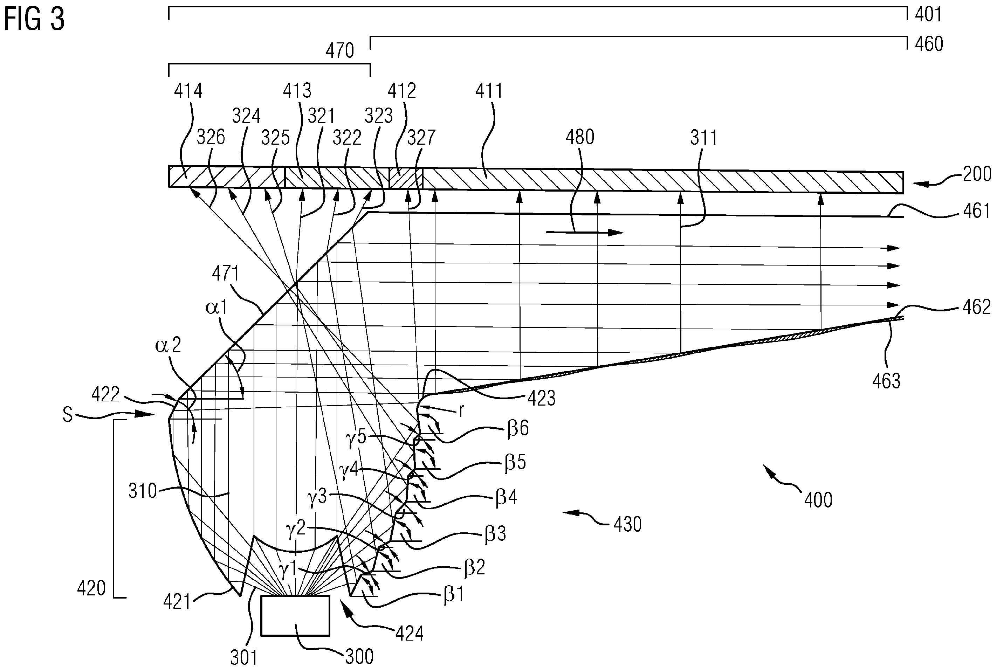

Fig. 3 zeigt einen Schnitt durch eine Ausführungsform eines erfindungsgemäßen Lichtleiters 400. Der Lichtleiter 400 ist weitgehend identisch mit dem in Fig. 2 dargestellten Lichtleiter 400. Allerdings weist der Lichtleiter 400 am Einkoppelbereich 420 auf einer Außenseite des Kollimators 421 eine in Richtung des Lichtleitbereichs 460 ausgebildete erfindungsgemäße Stufenstruktur 430 auf. Die Stufenstruktur ist hierbei zwischen der Lichtquelle 300 und der Unterseite 462 des Lichtleitbereichs 460 am Kollimator 421 ausgebildet. In beispielhafter Ausführungsform weist die Stufenstruktur 430 mehrere, im Ausführungsbeispiel sechs, nacheinander folgende Stufen 431-436 auf. Jede der sechs Stufen 431-436 weist wiederum einen Schenkel 441-446 und eine Flanke 451-455 auf, wobei die Flanken 451-455 die Schenkel 441-446 miteinander verbinden. Weiter weist der Einkoppelbereich 420 gegenüber der Stufenstruktur 430, zwischen dem Einkoppelbereich 420 und der Umlenkfläche 471 des Umlenkbereich 470 eine zweite Lichtumlenkfläche 422 auf. Die zweite Lichtumlenkfläche 422, welche eine Abschrägung s bildet, ist in einem Winkel α2 von 47° zur Ausrichtung des kollimierten Lichts 310 und zur Achse 480 des Lichtleiterbereichs 460 angeordnet. Die zweite Lichtumlenkfläche 422 ist ein Teil des Einkoppelbereichs 420 und Lichtumlenkfläche 471 und verbindet diese miteinander. Der Einkoppelbereich 420 weist weiter am Übergang der erfindungsgemäßen Stufenstruktur 430, einer sechsten Stufe 436, in die Unterseite 462 des Lichtleitbereichs 460 eine dritte Lichtumlenkfläche 423 auf. Die dritte Lichtumlenkfläche 423 ist als Radius r beziehungsweise als eine gekrümmte Fläche mit einem Radius r von 100 mm ausgebildet und verbindet die einen Schenkel 436 der sechsten Stufe 436 mit der Unterseite 462 des Lichtleitbereich 460.

Das von der Lichtquelle 300 ausgestrahlte Lichts 301 trifft, wie zuvor in Fig. 2 beschrieben, auf die einzelnen Einkoppelflächen der im Kollimator 421 ausgebildeten Nut 424 und das ausgestrahlte Licht 301 wird in den Einkoppelbereich 420 des Lichtleiters 400 eingekoppelt. Ein Teil des eingekoppelten Lichts 301 wird durch den Kollimator 421 in kollimiertes Licht 310 umgewandelt. Das kollimierte Licht 310 trifft unter einem definierten Winkeln auf die planare Lichtumlenkfläche 471 des Umlenkbereichs 470 und wird weiter in den Lichtleitbereich 460 umgelenkt. Der Lichtleitbereich 460 führt das kollimierte Licht 310 entlang einer Achse 480, wobei sich das kollimierte Licht 310 im Lichtleitbereich 460 wieder ausbreitet. Das auf die Unterseite 462 des Lichtleitbereichs 460 auftreffende kollimierte Licht 310 wird wieder durch die Struktur 463 in Richtung der Oberseite 461 umgelenkt. Das durch die Struktur 463 umgelenkte kollimierte Licht 310 wird an der Oberseite 461 des Lichtleitbereichs 460 als Licht 311 ausgekoppelt. Durch die auf der Unterseite 462 ausgebildete Struktur 463 wird eine flächige, homogene Ausleuchtung der Oberseite 461 des Lichtleitbereichs 460 und somit eine flächige, homogene Hinterleuchtung in einem ersten Bereich 411 des darüber angeordneten Display-Panels 200 realisiert.

Ein Teil des eingekoppelten Lichts 301, welches nicht kollimiert und nicht als kollimiertes Licht 310 in den Lichtleitbereich 460 des Lichtleiters 400 umgelenkt wird, trifft auf eine Fläche der Schenkel 441-446 der erfindungsgemäßen Stufenstruktur 430 des Kollimators 421 und wird gezielt in seinem Austrittswinkel geändert und in Richtung der Lichtumlenkfläche 471 des Umlenkbereich 470 umgelenkt. Die am Kollimator 421 ausgebildete erfindungsgemäße Stufenstruktur 420 sorgt dafür, dass ein Teil des eingekoppelten Lichts 301 in einer definierten Menge unter definierten Winkeln auf die Lichtumlenkfläche 471 des Lichtleiters 470 umgelenkt wird. Beim Auftreffen des von der Stufenstruktur 430 kommenden Lichts auf die Lichtumlenkfläche 471 erfolgt dann aufgrund des durch die Stufenstruktur 430 geänderten Winkels keine Totalreflexion, sondern das auf die Lichtumlenkfläche 471 auftreffende Licht 321-326 verlässt, weitestgehend oder komplett den Lichtleiter 400 im Bereich der Umlenkfläche 470 in definierten Winkeln.

Die Flächen der Schenkel 441-446 sind in einem Winkel β1- β6 zur Senkrechten der Ausbreitungsrichtung des kollimierten Lichts 310 und somit entgegen des Lichtleitbereichs 460 geneigt, wodurch eine optimale Hinterleuchtung des Display-Panels 200 im Bereich der Umlenkfläche 470 und dem daran angrenzenden Lichtleitbereich 460 erreicht wird. Im Ausführungsbeispiel weist die erste Stufe 431 einen ersten Schenkel 441 in einem Winkel β1 von 60° auf. Weiter weist die zweite Stufe 432, die der ersten Stufe 431 nachfolgt, einen zweiten Schenkel 442 in einem Winkel β2 von 70° auf. Die dritte Stufe 433, die der zweiten Stufe 432 nachfolgt, weist einen dritten Schenkel 443 in einem Winkel β3 von 80° auf und die vierte Stufe 434, die der dritten Stufe 433 nachfolgt, weist einen vierten Schenkel 444 in einem Winkel β4 von 85° auf. Die fünfte Stufe 435, die der vierten Stufe 434 nachfolgt, weist einen fünften Schenkel 445 in einen Winkel β5 von 92° auf. Abschließend weist die sechste Stufe 436, die der fünften Stufe 435 nachfolgt, einen sechsten Schenkel 446 in einem Winkel β6 von 96° auf. Die Winkel β1- β6 der einzelnen Schenkel 441-446 werden, von der ersten Stufe 431 zu der sechsten Stufe 436 immer größer, wodurch das auf die Flächen der Schenkel 441-446 treffende Licht gleichmäßig verteilt und eine optimale Hinterleuchtung im Umlenkbereich 470 und dem daran angrenzenden Lichtleitbereich 460 des Lichtleiters 400 erzielt wird.

Ein erster Teil des eingekoppelten Lichts 301, welches nicht kollimiert wird, trifft auf die Fläche des ersten Schenkels 441 der ersten Stufe 431, die Fläche des zweiten Schenkels 442 der zweiten Stufe 432 und auf die Fläche des dritten Schenkels 443 der dritten Stufe 433 und wird gezielt in seinem Austrittswinkel geändert, wodurch es in einer definierten Menge unter definierten Winkeln auf die Lichtumlenkfläche 471 des Lichtleiters 400 umgelenkt wird. Beim Auftreffen des von den Schenkeln 441-443 der erfindungsgemäßen Stufenstruktur 430 kommenden Lichts 301 auf die Lichtumlenkfläche 471, verlässt das dort auftreffende Licht 301 nahezu komplett den Lichtleiter 400 im Bereich der Umlenkfläche 471 des Umlenkbereichs 470 in definierten Winkeln. Das aus dem Lichtleiter 400 ausgekoppelte Licht 321-323 wird hierbei genutzt, um einen in diesem Bereich, einem dritten Bereich 413, angeordneten Teil des Display-Panels 200 zu hinterleuchten. Dabei kann auch ein geringfügiger Anteil dieses Lichts Übergangsbereiche des an den dritten Bereich 413 anschließenden zweiten Bereichs 412 sowie des an den dritten Bereich 413 anschließenden vierten Bereichs 414 hinterleuchten.

Ein zweiter Teil des eingekoppelten Lichts 301, welches nicht kollimiert wird, trifft auf die Fläche des vierten Schenkels 444 der vierten Stufe 434, die Fläche des fünften Schenkels 445 der fünften Stufe 435 und auf die Fläche des sechsten Schenkels 446 der sechsten Stufe 436 und wird gezielt in seinem Austrittswinkel geändert, wodurch es in einer definierten Menge unter definierten Winkeln auf die Lichtumlenkfläche 471 des Lichtleiters 400 umgelenkt wird. Beim Auftreffen des von den Schenkeln 444-446 der erfindungsgemäßen Stufenstruktur kommenden Lichts 301 auf die Lichtumlenkfläche 471, verlässt das dort auftreffende Licht nahezu komplett den Lichtleiter 400 im Bereich der Umlenkfläche 471 des Umlenkbereichs 470 in definierten Winkeln. Das aus dem Lichtleiter 400 ausgekoppelte Licht 324-326 wird hierbei genutzt, um einen in diesem Bereich, dem vierten Bereich 414, angeordneten Teil des Display-Panels 200 zu hinterleuchten. Dabei kann auch ein geringfügiger Anteil dieses Lichts einen Übergangsbereich im Übergang zu dem daran anschließenden dritten Bereich 413 hinterleuchten. Ein Vorteil des von der Lichtumlenkfläche 471 ausgekoppelten Lichts 321-326 besteht somit darin, dass das Ausbreitungsverhalten des ausgekoppelten Lichts 321-326, welches von den Schenkeln 441-446 der erfindungsgemäßen Stufenstruktur 430 auf die Lichtumlenkfläche 471 umgelenkt wird, vorhersehbar ist und zur Hinterleuchtung eines Display-Panels 200 in diesem Bereich 413, 414 genutzt werden kann

Ein weiterer Teil des Lichts 310, im Randbereich des Kollimators 421 gegenüber der erfindungsgemäßen Stufenstruktur 430, wird über die zweite Lichtumlenkfläche 422, zwischen dem Einkoppelbereich 420 und der Lichtumlenkfläche 471, auf die dritte Lichtumlenkfläche 423, zwischen der Stufenstruktur 430 und der Unterseite 462 des Lichtleitbereichs 460, weiter in Richtung der Oberseite 461 des Lichtleitbereichs 460 umgelenkt. Das aus dem Lichtleiter 400 ausgekoppelte Licht 327 wird hierbei genutzt, um einen in diesem Bereich, einem zweiten Bereich 412, angeordneten Teil des Display-Panels 200 zu hinterleuchten. Dabei kann auch ein geringfügiger Anteil dieses Lichts 327 Übergangsbereiche eines an den zweiten Bereich 412 anschließenden ersten Bereichs 411 sowie einen an den zweiten Bereich 412 anschließenden dritten Bereichs 413 hinterleuchten. Im Ausführungsbeispiel weist die zweite Lichtumlenkfläche 422 eine Abschrägung s in einem Winkel α2 zur Senkrechten zur Ausbreitungsrichtung des kollimierten Lichts 310 von 47° auf. Die dritte Lichtumlenkfläche 423 weist einen Radius r von 100 mm auf. Ein Vorteil des Lichts 310, welches über die zweite Lichtumlenkfläche und die dritte Lichtumlenkfläche in Richtung der Oberseite 461 umgelenkt und als Licht 327 aus dem Lichtleiter 400 ausgekoppelt wird, besteht somit darin, dass es zu keiner Überleuchtung und somit zu einer homogenen Lichtverteilung des eingekoppelten Lichts 301 im Lichtleiter kommt. Durch die erfindungsgemäße Stufenstruktur 430 sowie die zweite Lichtumlenkfläche 422 und die dritte Lichtumlenkfläche 423 kann das in den Einkoppelbereich 420 des Lichtleiters 400 eingekoppelte Licht 301 gezielt in der benötigten Intensität in einen Bereich 412-414 des Umlenkbereichs 470 und des Lichtleitbereichs 460 gelenkt und somit die gewünschte flächige homogene Hinterleuchtung des Display-Panels in diesem Bereich realisiert werden. Hierdurch kommt es zu keinen Verlusten des eingekoppelten Lichts 301 sowie zu keinem unerwünschten, unkontrollierten Streulicht und Überleuchtung im Lichtleiter 400. Das in den Lichtleiter 400 eingekoppelte Licht 301 kann somit vollständig genutzt werden, um ein Display-Panel 200 über die gesamte Länge 401 des Lichtleiters 400 zu hinterleuchten. Der nicht nutzbare Rand des Displays kann so auf wenige Millimeter verringert werden, sodass sich nahezu randlose Display-Anzeigen, ohne dass eine Blende im Umlenkbereich zum Verdecken von unerwünschtem Streulicht vorgesehen ist, realisieren lassen.

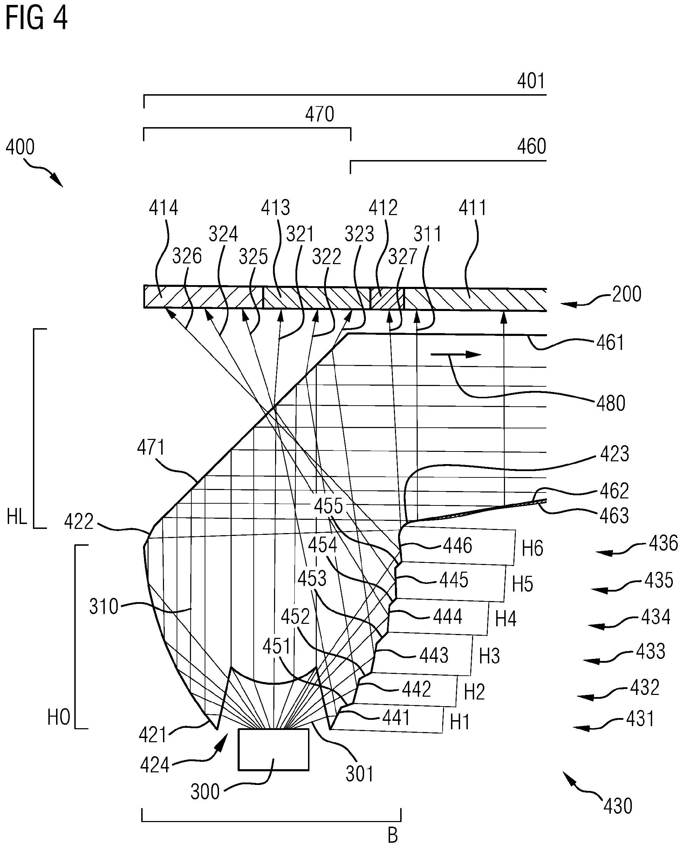

Fig. 4 zeigt einen Schnitt durch eine vergrößerte Darstellung einer Ausführungsform eines Einkoppelbereichs 420 eines erfindungsgemäßen Lichtleiters 400. Der Lichtleiter 400 ist identisch mit dem in Fig. 3 dargestellten Lichtleiter 400. Der Einkoppelbereich 420 des Lichtleiters 400 weist eine Höhe H0 und eine Breite B auf. Die im Ausführungsbeispiel dargestellten Stufen 431-436 der erfindungsgemäßen Stufenstruktur 430 weisen jeweils eine Höhe H1-H6 auf und sind abhängig von der Höhe H0 des Kollimators. Die Höhe H1-H6 der Stufen ist einheitlich ausgebildet. Die Höhe H1-H6 der im Ausführungsbeispiel dargestellten Stufen 431-436 ergibt sich dadurch, dass die Höhe H0 des Kollimators 421 durch die Anzahl der Stufen 431-436 geteilt wird. Je nach Anwendungsfall können die einzelnen Stufen 431-436 auch in ihrer Höhe H1-H6 variieren und nicht einheitlich in der Höhe H1-H6 ausgebildet sein. Aufgrund der Stufenstruktur 430 kann der Einkoppelbereich 420 durch eine einfache Anpassung der einzelnen Höhen H1-H6 der Stufen 431-436 an den konkreten Aufbau einer Anzeigevorrichtung, insbesondere an die Größe eines Display-Panels 200, welches hinterleuchtet werden soll, angepasst werden, d.h. die Höhe H1-H6 der einzelnen Stufen 431-436 kann auf einfache Weise variiert werden. Hierdurch lassen sich auch die Winkel β1-β6 der Schenkel 441-446 sowie die Winkel γ1-γ5 der Flanken 451-455 sowie der Winkel α2 der zweiten Lichtumlenkfläche 422 und der Radius r der dritten Lichtumlenkfläche variieren. Dies hat zum Vorteil, dass je nach Anwendungsfall eine kompakte Bauweise des Lichtleiters realisierbar ist, da die Höhe H0 und die Breite B des Kollimators 421 je nach Anwendungsfall variiert werden kann und somit eine flächige, homogene Hinterleuchtung des Display-Panels 200 über die gesamte Länge 401 des Lichtleiters 400 möglich ist, ohne das Lichtverluste entstehen. Ein weiterer Vorteil besteht darin, dass aufgrund der erfindungsgemäßen Stufenstruktur 430 des Kollimators 421 sowie der zweiten Lichtumlenkfläche 422 und der dritten Lichtumlenkfläche 423 eine Höhe HL des Lichtleitbereichs 460 individuell angepasst und im bevorzugten Fall in der Höhe HL verkleinert werden kann. Hierzu wird durch Anpassung der Höhe H0 und Breite B des Kollimators 461 die Höhe H1-H6 der Stufen 431-436, die Winkel β1-β6 der Schenkel 441-446, die Winkel γ1-γ5 der Flanken 451-455 sowie der Winkel α2 der zweiten Lichtumlenkfläche 422 und der Radius r der dritten Lichtumlenkfläche 471 geändert, wodurch das Licht gezielt in seinem Austrittwinkel geändert und auf die Lichtumlenkfläche 471 umgelenkt wird, damit eine flächige, homogene Hinterleuchtung des Display-Panels 200 erreicht wird. Die Lichtumlenkfläche 471 im Umlenkbereich 470 verläuft hierbei nicht über die gesamte Breite B des Kollimators 461, wodurch die Höhe HL des Lichtleitbereichs verkleinert werden kann.

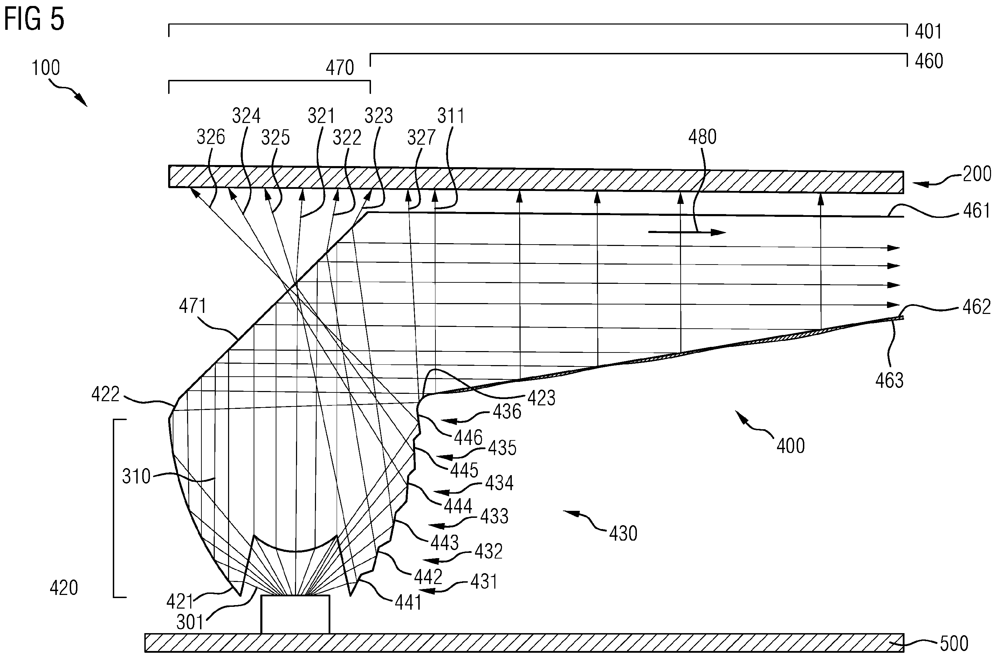

Fig. 5 zeigt einen Schnitt durch eine Anzeigevorrichtung 100 mit einem erfindungsgemäßen Lichtleiter 400 im montierten Zustand. Bei dieser Ausführungsform ist die Lichtquelle 300, deren Licht 301 durch den Lichtleiter 400 verteilt werden soll, auf einer Leiterplatte 500 der Anzeigevorrichtung 100 angeordnet. Das von der Lichtquelle 300 ausgestrahlte Licht 301 wird im Einkoppelbereich 420 in den Lichtleiter 400 eingekoppelt. Der Einkoppelbereich 420 weist einen Kollimator 461 auf, wobei das eingekoppelte Licht 301 teilweise in kollimiertes Licht 310 umgewandelt und mittels der Umlenkfläche 471 des Umlenkbereichs 470 in den Lichtleitbereich 460 umgelenkt wird. Dort wird das kollimierte Licht 310 in Richtung der Oberseite 461 des Lichtleiters 400 umgelenkt, und als Licht 311 ausgekoppelt, wo es nach dem Austritt aus dem Lichtleiter 400 zur Hinterleuchtung eines Display-Panels 200 im Lichtleitbereich 460 dient. Ein weiterer Teil des in den Lichtleiter 400 eingekoppelten Lichts 301 wird durch die erfindungsgemäße Stufenstruktur 430 des Kollimators 421 in seinem Austrittswinkel geändert und im Umlenkbereich 470 wieder aus dem Lichtleiter ausgekoppelt. Das ausgekoppelte Licht 321-326 wird zur Hinterleuchtung des Display-Panels 200 im Bereich des Umlenkbereich 470 verwendet. Ein Teil des nicht vollständig kollimierten Lichts 310 wird über die zweite Lichtumlenkfläche 422 und die dritte Lichtumlenkfläche 423 in Richtung der Oberseite 461 des Lichtleiters 400 umgelenkt, und als Licht 317 ausgekoppelt, wo es nach dem Austritt aus dem Lichtleiter 400 zur Hinterleuchtung eines Display-Panels 200 zwischen dem Lichtleitbereich 460 und dem Umlenkbereich 470 dient.

Insgesamt zeigt das Ausführungsbeispiel, wie durch die Erfindung in einfacher Weise ein Lichtleiter mit der erfindungsgemäßen Stufenstruktur des Kollimators ausgebildet sein kann, damit bei einem geringem Bauraumbedarf eine homogene Lichtverteilung im Lichtleiter und somit eine flächige, homogene Hinterleuchtung eines Display-Panels über die gesamte Länge des Lichtleiters in der benötigten Intensität erreicht wird, ohne das Lichtverluste entstehen. Aufgrund der erfindungsgemäßen Stufenstruktur lassen sich größere Displays über die gesamte Länge des Lichtleiters mit einem sehr kleinen Rahmen realisieren.

### Bezugszeichenliste

- 100: Anzeigevorrichtung
- 200: Display-Panel
- 300: Lichtquelle
- 301: einzukoppelndes Licht
- 310: Kollimiertes Licht
- 311: Umgelenktes Licht
- 321: Umgelenktes Licht
- 322: Umgelenktes Licht
- 323: Umgelenktes Licht
- 324: Umgelenktes Licht
- 325: Umgelenktes Licht
- 326: Umgelenktes Licht
- 327: Umgelenktes Licht
- 330: Streulicht
- 400: Lichtleiter
- 401: Länge Lichtleiter
- 411: Erster Bereich
- 412: Zweiter Bereich
- 413: Dritter Bereich
- 414: Vierter Bereich
- 420: Einkoppelbereich
- 421: Kollimator
- 422: Zweite Lichtumlenkfläche
- 423: Dritte Lichtumlenkfläche
- 424: Nut
- 430: Stufenstruktur
- 431: Erste Stufe
- 432: Zweite Stufe
- 433: Dritte Stufe
- 434: Vierte Stufe
- 435: Fünfte Stufe
- 436: Sechste Stufe
- 441: Schenkel
- 442: Schenkel
- 443: Schenkel
- 444: Schenkel
- 445: Schenkel
- 446: Schenkel
- 451: Flanke
- 452: Flanke
- 453: Flanke
- 454: Flanke
- 455: Flanke
- 460: Lichtleitbereich
- 461: Oberseite
- 462: Unterseite
- 463: Struktur
- 470: Umlenkbereich
- 471: Lichtumlenkfläche
- 480: Achse
- 500: Leiterplatte
- s: Abschrägung
- r: Radius
- HL: Höhe Lichtleitbereich
- H0: Höhe Kollimator
- H1: Höhe erste Stufe
- H2: Höhe zweite Stufe
- H3: Höhe dritte Stufe
- H4: Höhe vierte Stufe
- H5: Höhe fünfte Stufe
- H6: Höhe sechste Stufe
- B: Breite Kollimator
- α1: Winkel
- α2: Winkel
- β1: Winkel
- β2: Winkel
- β3: Winkel
- β4: Winkel
- β5: Winkel
- β6: Winkel
- γ1: Winkel
- γ2: Winkel
- γ3: Winkel
- γ4: Winkel
- γ5: Winkel

## Patentansprüche

1. Lichtleiter (400) für eine Anzeigevorrichtung (100) mit einem Display-Panel (200),
wobei der Lichtleiter (400) einen Einkoppelbereich (420) zum Einkoppeln von Licht (301) einer Lichtquelle (300) aufweist,
wobei der Einkoppelbereich (420) einen Kollimator (421) aufweist, der das Licht (301) in kollimiertes Licht (310) umwandelt,
wobei der Lichtleiter (400) einen Lichtleitbereich (460) zum Führen des kollimierten Lichts (310) entlang einer Achse (480) aufweist,
wobei der Lichtleitbereich (460) eine Oberseite (461), die parallel zur Achse (480) ausgestaltet ist, und eine Unterseite (462), die relativ zur Achse (480) geneigt ist und eine Struktur (463) zum Umlenken des auf die Unterseite (462) auftreffenden kollimierten Lichts (310) als umgelenktes Licht (311) in Richtung der Oberseite (461) aufweist,
wobei die Struktur (463) ausgestaltet ist, eine homogen flächige Hinterleuchtung der Oberseite (461) zu realisieren,
wobei der Lichtleiter (400) einen Umlenkbereich (470) mit einer Lichtumlenkfläche (471) zum Umlenken des kollimierten Lichts (310) in den Lichtleitbereich (460) aufweist,
wobei die Lichtumlenkfläche (461) in einem Winkel (α1) von 45° zur Ausrichtung des kollimierten Lichts (310) und zur Achse (480) des Lichtleiterbereichs (460) angeordnet ist,
**dadurch gekennzeichnet,**
**dass** der Kollimator (421) eine Stufenstruktur (430) aufweist.

2. Lichtleiter (400) nach Anspruch 1, **dadurch gekennzeichnet, dass** die Stufenstruktur (430) mindestens sechs Stufen (431-436) aufweist.

3. Lichtleiter (400) nach einem der vorherigen Ansprüche 1 und 2, **dadurch gekennzeichnet, dass** jede der Stufen (431-436) einen Schenkel (441-446) aufweist und die Schenkel (441-446) untereinander mittels jeweils einer Flanke (451-455) verbunden sind.

4. Lichtleiter (400) nach Anspruch 3, **dadurch gekennzeichnet, dass** jeder Schenkel (441-446) jeweils einen Winkel (β1-β6) zur Senkrechten zur Ausbreitungsrichtung des kollimierten Lichts (310) aufweist.

5. Lichtleiter (400) nach Anspruch 4, **dadurch gekennzeichnet, dass** die Winkel (β1-β6) der Schenkel (441-446) zur Senkrechten zur Ausbreitungsrichtung des kollimierten Lichts (310) von der Lichtquelle (300) zu der Unterseite (462) des Lichtleitbereichs (460) zunehmen.

6. Lichtleiter (400) nach einem der vorherigen Ansprüche 3 bis 5, **dadurch gekennzeichnet, dass** jede der Flanken (451-455) einen Winkel (γ1-γ6) zur Senkrechten zur Ausbreitungsrichtung des kollimierten Lichts (310) aufweist.

7. Lichtleiter (400) nach einem der vorherigen Ansprüche 1 bis 6, **dadurch gekennzeichnet, dass** der Lichtleiter (400) an dem Einkoppelbereich (420) und/oder dem Umlenkbereich (470) eine zweite Lichtumlenkfläche (422) aufweist.

8. Lichtleiter (400) nach einem der vorherigen Ansprüche 1 bis 7, **dadurch gekennzeichnet, dass** der Lichtleiter (400) am Übergang der Stufenstruktur (430) in die Unterseite (462) des Lichtleitbereichs (460) eine dritte Lichtumlenkfläche (423) aufweist.
